# EUROPEAN PATENT APPLICATION

(11) **EP 4 393 702 A1**
(43) Date of publication of application: **03.07.2024**
(21) Application number: 22880677.4
(22) Date of filing: 08.09.2022
(51) Int. Cl.: B32B 27/40, C08G 18/00, C08G 18/48, C08G 18/82, D06N 3/06, D06N 3/14

(54) **LAMINATE AND SYNTHETIC LEATHER**

(30) Priority: 12.10.2021 JP 2021167290
(71) Applicant: DIC Corporation, Tokyo 174-8520 (JP)
(72) Inventor: MORIBATAKE Takuma, Takaishi-shi, Osaka 592-0001 (JP); NAKAMOTO Yasuhiro, Takaishi-shi, Osaka 592-0001 (JP); MAEDA Ryo, Takaishi-shi, Osaka 592-0001 (JP)
(74) Representative: Kraus & Lederer PartGmbB
(86) International application number: PCT/JP2022/033642
(87) International publication number: WO 2023/062981

(57) **Abstract**

The present invention provides a laminate including a thermoplastic resin layer and a coating formed from a urethane resin composition including a urethane resin (A) having a nonionic group, water (B), and an epoxy compound (C), and also provides a synthetic leather including the laminate. The laminate including the coating formed from the urethane resin composition and the synthetic leather can exhibit excellent bleeding resistance and heat discoloration resistance.

## Description

### Technical Field

The present invention relates to a laminate and a synthetic leather.

### Background Art

In the market of leather for interiors of vehicles, polyvinyl chloride (PVC) leather, which is cost-competitive, has been widely employed. PVC leather is often coated with urethane resin (PU) as a skin layer or a surface treatment layer because bleeding of a plasticizer and poor texture are regarded as problematic (for example, see PTL 1).

Solvent-based urethane resins have been now mainly used, but a "water-based or solvent-free" coating for PVC has been strongly demanded for the purpose of advancing environmental friendliness such as SDGs. However, when heat resistance tests are conducted on PVC coated with water-based PU, a hydrophilic raw material contained in the PU accelerates the degradation of the PVC and the PU, which results in discoloration. Therefore, to change solvent-based PU for PVC coating materials into water-based PU, establishing a formulation with excellent heat discoloration resistance is an issue of the utmost importance.

### Citation List

### Patent Literature

PTL 1: Japanese Unexamined Patent Application Publication (Translation of PCT Application) No. 2008-514403

### Summary of Invention

### Technical Problem

An object of the present invention is to provide a laminate including a thermoplastic resin layer and a coating formed of a urethane resin composition including water, the laminate being excellent in bleeding resistance and heat discoloration resistance.

### Solution to Problem

The present invention provides a laminate including: a thermoplastic resin layer; and a coating formed of a urethane resin composition including a urethane resin (A) having a nonionic group, water (B), and an epoxy compound (C) .

The present invention also provides a synthetic leather including the laminate.

### Advantageous Effects of Invention

The laminate according to the present invention is a laminate including a thermoplastic resin layer and a coating formed of a urethane resin composition including water, and the laminate is excellent in bleeding resistance and heat discoloration resistance.

### Description of Embodiments

A laminate according to the present invention includes a thermoplastic resin layer and a coating formed of a specific urethane resin composition.

Examples of the thermoplastic resin layer that can be used include layers formed using known polyvinyl chloride, polyvinyl acetate, polyvinylidene chloride, and polystyrene. In the present invention, even when polyvinyl chloride is used as the thermoplastic resin, the laminate has excellent bleeding resistance and heat discoloration resistance.

The coating is formed of a urethane resin composition including a urethane resin (A) having a nonionic group, water (B), and an epoxy compound (C).

From the viewpoint of achieving excellent bleeding resistance and heat discoloration resistance, a urethane resin having a nonionic group is essentially used as the urethane resin (A). When a urethane resin having an anionic group into which a carboxyl group, a sulfonic acid groups, or the like is introduced is used in place of the urethane resin (A), PVC is quickly degraded due to the carboxyl group itself or an amine compound that neutralizes the carboxyl group or the like. As a result, dehydrochlorination, which is a discoloration factor, is accelerated and causes further PVC degradation and PU decomposition. Thus, an epoxy-based compound to be added as a hydrochloric acid scavenger becomes less effective, and thereby discoloration cannot be prevented. In contrast, the urethane resin (A) having the nonionic group is not affected by neutralizing amines or carboxylic acid and the later-described epoxy compound (C) satisfactorily demonstrates the effect of scavenging hydrochloric acid, and therefore bleeding and discoloration can be substantially prevented.

Examples of a method for obtaining the urethane resin (A) having the nonionic group include a method using a compound having an oxyethylene structure as a raw material.

Examples of the compound having the oxyethylene structure that can be used include polyether polyols having an oxyethylene structure, such as polyethylene glycol, polyoxyethylene polyoxypropylene glycol, polyoxyethylene polyoxytetramethylene glycol, and polyethylene glycol dimethyl ether. These compounds may be used alone or in combination of two or more. Among these compounds, polyethylene glycol and/or polyethylene glycol dimethyl ether are preferably used from the viewpoint of more easily controlling hydrophilicity.

From the viewpoint of achieving still more excellent emulsifiability, bleeding resistance, heat discoloration resistance, and water dispersion stability, the number average molecular weight of the compound having the oxyethylene structure is preferably within a range of 200 to 10,000, more preferably within a range of 300 to 3,000, still more preferably within a range of 300 to 2,000, and particularly preferably within a range of 300 to 1,000. Note that the number average molecular weight of the compound having the oxyethylene structure is a value determined by gel permeation chromatography (GPC).

Specific examples of the urethane resin (A) that can be used include a reaction product of a chain extender (a1), a polyol (a2), a polyisocyanate (a3), and the compound having the oxyethylene structure.

As the chain extender (a1), a chain extender having a molecular weight of less than 500 (preferably within a range of 50 to 450) can be used. Specific examples of the chain extender that can be used include: hydroxyl group-containing chain extenders, such as ethylene glycol, diethylene glycol, triethylene glycol, propylene glycol, dipropylene glycol, 1,3-propanediol, 1,3-butanediol, 1,4-butanediol, hexamethylene glycol, saccharose, methylene glycol, glycerin, sorbitol, bisphenol A, 4,4'-dihydroxydiphenyl, 4,4'-dihydroxydiphenyl ether, and trimethylolpropane; and amino group-containing chain extenders, such as ethylenediamine, 1,2-propanediamine, 1,6-hexamethylenediamine, piperazine, 2,5-dimethylpiperazine, isophoronediamine, 1,2-cyclohexanediamine, 1,3-cyclohexanediamine, 1,4-cyclohexanediamine, 4,4'-dicyclohexylmethanediamine, 3,3'-dimethyl-4,4'-dicyclohexylmethanediamine, 1,4-cyclohexanediamine, and hydrazine. These chain extenders may be used alone or in combination of two or more. Note that the molecular weight of the chain extender (a1) is a value calculated from a chemical formula.

From the viewpoints of enabling chain extension with ease even at a relatively low-temperature of 30°C or lower and thereby reducing energy consumption during reaction, and achieving still more excellent mechanical strength, film formability, foam retention, texture, bleeding resistance, low-temperature bendability, heat discoloration resistance, and peel strength by the introduction of a urea group, and still more easily achieving high solids of the urethane resin (A), the chain extender (a1) is preferably a chain extender having an amino group (hereinafter, abbreviated as "an amine-based chain extender"). From the viewpoint of achieving still more excellent foam retention, emulsifiability, low-temperature bendability, texture, and water dispersion stability, an amine-based chain extender having a molecular weight within a range of 30 to 250 is more preferably used. Note that, when two or more types of the chain extenders are used together, the molecular weight indicates the average value of the chain extenders, and the average value is beneficially included within the preferred molecular weight range.

From the viewpoints of achieving still more excellent mechanical strength, film formability, heat discoloration resistance, texture, peel strength, foam retention, emulsifiability, bleeding resistance, low-temperature bendability, and water dispersion stability, and still more easily achieving high solids of the urethane resin (A), the proportion of the chain extender (a1) used is preferably within a range of 0.1% to 30% by mass, and more preferably within a range of 0.5% to 10% by mass, based on the total mass of the raw materials constituting the urethane resin (X) .

Examples of the polyol (a2) that can be used include: polyether polyol, polyester polyol, polyacrylic polyol, polycarbonate polyol, and polybutadiene polyol. These polyols may be used alone or in combination of two or more. Note that, as the polyol (a2), use is made of a polyol other than the compound having the oxyethylene structure that produces the nonionic group.

From the viewpoint of mechanical strength of the coating to be obtained, the number average molecular weight of the polyol (a2) is preferably within a range of 500 to 100,000, and more preferably within a range of 800 to 10,000. Note that the number average molecular weight of the polyol (a2) is a value determined by gel permeation chromatography (GPC).

From the viewpoint of achieving still more excellent bleeding resistance, heat discoloration resistance, and mechanical strength, the proportion of the polyol (a2) used is preferably within a range of 40% to 90% by mass, and more preferably within a range of 50% to 80% by mass, based on the total mass of the raw materials constituting the urethane resin (A).

Examples of the polyisocyanate (a3) that can be used include: aromatic polyisocyanates, such as phenylene diisocyanate, toluene diisocyanate, diphenylmethane diisocyanate, xylylene diisocyanate, naphthalene diisocyanate, polymethylene polyphenyl polyisocyanate, and carbodiimidated diphenylmethane polyisocyanate; and aliphatic or alicyclic polyisocyanates, such as hexamethylene diisocyanate, lysine diisocyanate, cyclohexane diisocyanate, isophorone diisocyanate, dicyclohexylmethane diisocyanate, xylylene diisocyanate, tetramethylxylylene diisocyanate, dimer acid diisocyanate, and norbornene diisocyanate. These polyisocyanates may be used alone or in combination of two or more.

From the viewpoint of achieving still more excellent bleeding resistance, heat discoloration resistance, and mechanical strength, the proportion of the polyisocyanate (a3) used is preferably within a range of 5% to 40% by mass, and more preferably within a range of 10% to 35% by mass, based on the total mass of the raw materials constituting the urethane resin (A).

From the viewpoint of achieving still more excellent foam retention, emulsifiability, water dispersion stability, low-temperature bendability, heat discoloration resistance, and film formability, the proportion of the compound having the oxyethylene structure is preferably 5% by mass or lower, more preferably 3% by mass or lower, and still more preferably within a range of 0.25% to 3% by mass, based on the total mass of the raw materials constituting the urethane resin (A).

From the viewpoints of achieving more excellent bleeding resistance, foam retention, heat discoloration resistance, surface smoothness, texture, low-temperature bendability, and film formability, the average particle size of the urethane resin (A) is preferably within a range of 0.01 to 1 µm, and more preferably within a range of 0.05 to 0.9 um. Note that a method for measuring the average particle size of the urethane resin (A) will be described later in Examples.

The content of the urethane resin (A) in the urethane resin composition according to the present invention is preferably 50% to 80% by mass, and more preferably 50% to 70% by mass. A so-called high solid content of the urethane resin (A) in a water dispersion leads to still more excellent retention of foam produced even by mechanical foaming and leads to the improvement of drying properties of the urethane resin composition, and hence, more excellent crack resistance during and/or after drying is achieved, and excellent texture, bleeding resistance, heat discoloration resistance, and low-temperature bendability can be achieved.

Next, a method for producing the urethane resin (A) will be described.

The method for producing the urethane resin (A) to be used in the present invention includes the steps of: allowing the polyol (a2), the polyisocyanate (a3), and the compound having the oxyethylene structure to react with each other under solvent-free condition to obtain a urethane prepolymer (i) having an isocyanate group (hereinafter, abbreviated as "the prepolymer step"); subsequently dispersing the urethane prepolymer (i) in the water (hereinafter, abbreviated as "the emulsification step"); and then allowing the resultant water dispersion to react with the chain extender (a1) to obtain the urethane resin (A) (hereinafter, abbreviated as "the chain extension step").

The prepolymer step is preferably performed under solvent-free condition. In the conventional technologies, the prepolymer step was performed commonly in the presence of an organic solvent such as methyl ethyl ketone or acetone, and accordingly a desolvation step of removing the organic solvent after the emulsification step was needed, which required several days for production at an actual production site. Furthermore, it was difficult to completely remove the organic solvent at the desolvation step and a small amount of the organic solvent often remains, and thus it was difficult to perfectly achieve environmental friendliness. In contrast, the production of the prepolymer under solvent-free condition allows a urethane resin not containing an organic solvent at all to be obtained and can also achieve a labor-saving production process for the urethane resin.

The molar ratio [isocyanate group/(hydroxyl and amino groups)] of the isocyanate group of the polyisocyanate (a3) to the total of the hydroxyl group of the polyol (a2) and the hydroxyl and amino groups of the compound having the oxyethylene structure at the prepolymer step is preferably within a range of 1.1 to 3 and more preferably within a range of 1.2 to 2, from the viewpoint of achieving still more excellent foam retention, low-temperature bendability, crack resistance, surface smoothness, film formability, texture, peel strength, heat discoloration resistance, and mechanical strength.

The reaction at the prepolymer step is performed, for example, at a temperature of 50°C to 120°C for 1 to 10 hours.

The emulsification step can be performed using, for example, a reaction vessel equipped with stirring blades; a kneading machine, such as a kneader, a continuous kneader, a taper roll, a single-screw extruder, a twin-screw extruder, a triple-screw extruder, a universal mixer, Plastomill, or a Bodeda kneader; a rotary dispersion mixer, such as a homomixer, a static mixer, Filmix, Ebara-Milder, Clearmix, Ultra-Turrax, Cavitron, or Biomixer; an ultrasonic dispersion device; or a device having no moving part and being capable of mixing by the flow of a fluid itself, such as an in-line mixer.

The emulsification step is preferably performed under a temperature at which water does not evaporate, for example, a temperature within a range of 10°C to 90°C. The emulsification step can be performed using the same equipment as for the prepolymer step.

The chain extension step is a step of allowing the isocyanate group of the urethane prepolymer (i) to react with the chain extender (a1) to increase the molecular weight of the urethane prepolymer (i) and thereby obtaining the urethane resin (A). From the viewpoint of productivity, the chain extension step is preferably performed at a temperature of 50°C or lower.

The molar ratio [(hydroxyl and amino groups)/isocyanate group] of the total of the hydroxyl and amino groups of the chain extender (a1) to the isocyanate group of the urethane prepolymer (i) at the chain extension step is preferably within a range of 0.8 to 1.1, and more preferably within a range of 0.9 to 1, from the viewpoint of achieving still more excellent low-temperature bendability, heat discoloration resistance, crack resistance, film formability, and mechanical strength.

The chain extension step can be performed using the same equipment as for the prepolymer step.

Examples of the water (B) that can be used in the present invention include ion-exchanged water and distilled water. These types of water may be used alone or in combination of two or more.

The epoxy compound (C) is essential for achieving excellent bleeding resistance and heat discoloration resistance. It is considered that an epoxy group of the epoxy compound has the effects of hydrochloric acid scavenging and amine scavenging, whereby discoloration can be substantially prevented.

Examples of the epoxy compound (C) that can be used include: compounds having one epoxy group, such as butyl glycidyl ether, 2-ethylhexyl glycidyl ether, allyl glycidyl ether, glycidol, lauryl alcohol glycidyl ether, glycidyl ether of polyethylene glycol alcohol ether with 1 to 18 carbon atoms, phenyl glycidyl ether, and p-tert-butyl phenyl glycidyl ether; and compounds having two or more epoxy groups, such as polyglycidyl ethers such as polypropylene glycol diglycidyl ether, glycerol diglycidyl ether, glycerol polyglycidyl ether, polyglycerol polyglycidyl ether, trimethylolpropane polyglycidyl ether, sorbitol polyglycidyl ether, pentaerythritol polyglycidyl ether, resorcinol diglycidyl ether, neopentyl glycol diglycidyl ether, 1,6-hexanediol diglycidyl ether, 1,4-butanediol diglycidyl ether, and hydrogenated bisphenol A diglycidyl ether, ethylene glycol diglycidyl ether, polyethylene glycol diglycidyl ether, polypropylene glycol diglycidyl ether, polytetramethylene glycol diglycidyl ether, polybutadiene diglycidyl ether, sorbitol polyglycidyl ether, and polyglycerin polyglycidyl ether. These epoxy compounds may be used alone or in combination of two or more. The structures of the above-mentioned epoxy compounds may be partially modified with a carbonate, urethane, or urea bond. Among these epoxy compounds, an epoxy compound having no aromatic ring is preferably used from the viewpoint of achieving still more excellent heat discoloration resistance.

From the viewpoint of achieving still more excellent bleeding resistance and heat discoloration resistance, the number average molecular weight of the epoxy compound (C) is preferably 200 to 1,500, and more preferably 250 to 1,000. A method for measuring the number average molecular weight of the epoxy compound (C) will be described in Examples.

The number of functional groups (the number of epoxy groups) of the epoxy compound (C) is preferably 2 to 5 and more preferably 2 to 4 from the viewpoint of achieving still more excellent bleeding resistance and heat discoloration resistance.

The chlorine content of the epoxy compound (C) is preferably 9% by mass or lower, and more preferably 5% by mass or lower, from the viewpoint of achieving still more excellent bleeding resistance and heat discoloration resistance.

From the viewpoint of achieving still more excellent bleeding resistance and heat discoloration resistance, the amount of the epoxy compound (C) contained is preferably 4 to 16 parts by mass, and more preferably 8 to 12 parts by mass, with respect to 100 parts by mass of the urethane resin (A).

The urethane resin composition according to the present invention includes the urethane resin (A) having the nonionic group, the water (B), and the epoxy compound (C), as essential components, and may further include other additives, if necessary.

Examples of the other additives that can be used include a urethanizing catalyst, a neutralizer, a crosslinking agent, a silane coupling agent, a thickener, a filler, a thixotropy-imparting agent, a tackifier, a wax, a heat stabilizer, a light stabilizer, a fluorescent brightening agent, a foaming agent, a pigment, a dye, an electrical conductivity-imparting agent, an antistatic agent, a moisture permeability improver, a water repellent, an oil repellent, a hollow foam, a flame retardant, a desiccant, a moisture absorbent, a deodorant, a foam stabilizer, an anti-blocking agent, and an anti-hydrolysis agent. These additives may be used alone or in a combination of two or more.

Next, the synthetic leather according to the present invention will be described.

Examples of the synthetic leather include a synthetic leather including a substrate, a thermoplastic resin layer, the coating, and a surface-treatment layer, which are stacked in order.

Examples of the substrate that can be used include nonwoven fabrics, woven fabrics, and knitted fabrics, each made of polyester fibers, polyethylene fibers, nylon fibers, acrylic fibers, polyurethane fibers, acetate fibers, rayon fibers, polylactic acid fibers, cotton, hemp, silk, wool, glass fibers, carbon fibers, or fiber mixtures thereof.

Examples of the surface treatment layer that can be used include layers formed from known solvent-based urethane resins, water-based urethane resins, solvent-based acrylic resins, or water-based acrylic resins.

### Examples

Hereinafter, the present invention will be described in more detail by way of Examples.

### [Synthesis Example 1] Preparation of Urethane Resin (A-1) Composition

In the presence of 0.1 parts by mass of tin 2-ethylhexanoate, 1,000 parts by mass of polycarbonate polyol (produced using 1,6-hexanediol as a raw material, number average molecular weight: 2,000), 38 parts by mass of polyethylene glycol ("PEG600", manufactured by NOF CORPORATION, number average molecular weight: 600, hereinafter abbreviated as "PEG"), and 262 parts by mass of dicyclohexylmethane diisocyanate (HMDI) were allowed to react with each other at 100°C until NCO% reached 2.8%, whereby a urethane prepolymer was obtained.

The urethane prepolymer heated to 70°C, 65 parts by mass of a 20% aqueous solution of sodium dodecylbenzenesulfonate ("NEOGEN S-20F", manufactured by DKS Co. Ltd.) as an emulsifier, and 948 parts by mass of water were stirred and mixed using a homomixer to obtain an emulsion. Immediately after that, a diluted water solution of isophoronediamine (IPDA) having an amino group content corresponding to an equimolar amount of NCO groups was added to the emulsion to cause chain extension, whereby a urethane resin (A-1) composition having a final urethane resin (A-1) content of 58% by mass was obtained.

### [Synthesis Example 2] Preparation of Urethane Resin (A-2) Composition

In the presence of 0.1 parts by mass of tin 2-ethylhexanoate, 1,000 parts by mass of polycarbonate polyol (produced using 1,6-hexanediol as a raw material, number average molecular weight: 2,000), 38 parts by mass of polyethylene glycol ("PEG600", manufactured by NOF CORPORATION, number average molecular weight: 600, hereinafter abbreviated as "PEG"), and 262 parts by mass of dicyclohexylmethane diisocyanate (HMDI) were allowed to react with each other at 100°C until NCO% reached 2.8%, whereby a urethane prepolymer was obtained.

The urethane prepolymer heated to 70°C, 65 parts by mass of a polypropylene-polyethylene copolymer ("PLURONIC (registered trademark) L-64", manufactured by ADEKA CORPORATION) as an emulsifier, and 957 parts by mass of water were stirred and mixed using a homomixer to obtain an emulsion. Immediately after that, a diluted water solution of IPDA having an amino group content equivalent to 95% of NCO groups was added to the emulsion to cause chain extension, whereby a urethane resin (A-2) composition having a final urethane resin (A-2) content of 60% by mass was obtained.

### [Synthesis Example 3] Preparation of Urethane Resin (A-3) Composition

A resin composition was obtained in the same manner as in Synthesis Example 1 and evaluated, except that polycarbonate polyol (produced using 1,6-hexanediol as a raw material, number average molecular weight: 2,000) was changed to polyester polyol (a reaction product of 1,6-hexanediol and adipic acid, number average molecular weight: 2,000).

### [Synthesis Example 4] Preparation of Urethane Resin (A-4) Composition

A resin composition was obtained in the same manner as in Synthesis Example 1 and evaluated, except that polycarbonate polyol (produced using 1,6-hexanediol as a raw material, number average molecular weight: 2,000) was changed to polyoxytetramethylene glycol (number average molecular weight: 2,000).

### [Synthesis Example 5] Preparation of Urethane Resin (A-5) Composition

In the presence of 0.1 parts by mass of tin 2-ethylhexanoate, 1,000 parts by mass of polycarbonate polyol (produced using 1,6-hexanediol as a raw material, number average molecular weight: 2,000), 38 parts by mass of polyethylene glycol ("PEG600", manufactured by NOF CORPORAION, number average molecular weight: 600, hereinafter abbreviated as "PEG"), 155 parts by mass of isophorone diisocyanate, and 50 parts by mass of hexane diisocyanate were allowed to react with each other at 100°C until NCO% reached 3.0%, whereby a urethane prepolymer was obtained.

The urethane prepolymer heated to 70°C, 65 parts by mass of a polypropylene-polyethylene copolymer ("PLURONIC (registered trademark) L-64", manufactured by ADEKA CORPORATION) as an emulsifier, and 919 parts by mass of water were stirred and mixed using a homomixer to obtain an emulsion. Immediately after that, a diluted water solution of IPDA having an amino group content equivalent to 95% of NCO groups was added to the emulsion to cause chain extension, whereby a urethane resin (A-2) composition having a final urethane resin (A-2) content of 60% by mass was obtained.

### [Comparative Synthesis Example 1] Preparation of Urethane Resin (AR-1) Composition

Into a vessel equipped with a thermometer, a nitrogen gas introduction tube, and a stirrer and purged with nitrogen, 375 parts by mass of polycarbonate polyol (produced using 1,6-hexanediol as a raw material, number average molecular weight: 2,000), 100 parts by mass of methyl ethyl ketone, and 11 parts by mass of dimethylolpropionic acid were fed, and sufficiently stirred and mixed. After the stirring and mixing, 57 parts by mass of dicyclohexylmethane diisocyanate and 0.03 parts by mass of carboxylic acid bismuth were added to the mixture, and the resultant was allowed to react at 75°C for approximately 4 hours, whereby a methyl ethyl ketone solution of a urethane prepolymer having an isocyanate group at a molecular end thereof was obtained. Subsequently, 8.0 parts by mass of triethylamine was added to the methyl ethyl ketone solution of the urethane prepolymer obtained by the above-described method to neutralize a carboxyl group in the urethane prepolymer. After the neutralization, 825 parts by mass of ion-exchanged water was added, and then 2.8 parts by mass of piperazine was added, and the resultant mixture was allowed to react. After the completion of the reaction, methyl ethyl ketone was removed by evaporation under reduced pressure, whereby a urethane resin (AR-1) composition having a final urethane resin (AR-1) content of 35% by mass was obtained.

### [Example 1]

### <Method for Producing Laminate>

### [Method for Evaluating Bleeding Resistance]

A liquid mixture of 100 parts by mass of the urethane resin (A-1) composition obtained in Synthesis Example 1, 2 parts by mass of trimethylolpropane polyglycidyl ether ("DENACOL EX-321L", manufactured by Nagase ChemteX Corporation, number average molecular weight: 250 to 350, the number of functional groups: 2 to 3, chlorine content: 0.2% to 0.4% by mass), and 1 part by mass of an associative thickener ("HYDRAN ASSISTER T10", manufactured by DIC Corporation) was applied onto a PVC leather to achieve a solid film thickness of 30 microns, and dried at 70°C for 2 minutes and further dried at 120°C for 2 minutes to produce a polyurethane resin film.

The obtained PU/PVC leather was allowed to stand at room temperature (approximately 25°C) for one day, then a surface thereof was visually observed to determine whether bleeding is present. A laminate without bleeding was rated "good", meanwhile a laminate with bleeding was rated "poor".

### [Method for Evaluating Heat Discoloration Resistance]

A PU/PVC leather produced using the same method as that described in "Method for Evaluating Bleeding Resistance" was allowed to stand in a 110°C thermostatic oven for 400 hours. A surface of the leather taken out from the oven was rated "A" when the surface was colorless or slightly discolored, rated "B" when the surface was discolored slightly yellow, rated "C" when the surface was discolored yellow to brown, or rated "D" when the surface was heavily discolored dark brown.

### [Example 2]

A liquid mixture of 100 parts by mass of the urethane resin (A-1) composition obtained in Synthesis Example 1, 5 parts by mass of trimethylolpropane polyglycidyl ether ("DENACOL EX-321L", manufactured by Nagase ChemteX Corporation, number average molecular weight: 250 to 350, the number of functional groups: 2 to 3, chlorine content: 1% by mass or lower), and 1 part by mass of an associative thickener ("HYDRAN ASSISTER T10", manufactured by DIC Corporation) was applied onto a PVC leather to achieve a solid film thickness of 30 microns, and dried at 70°C for 2 minutes and further dried at 120°C for 2 minutes to produce a polyurethane resin film, and the resultant laminate was evaluated in the same manner as above.

### [Example 3]

A laminate was obtained and evaluated in the same manner as in Example 2, except that the urethane resin (A-2) composition was used in place of the urethane resin (A-1) composition.

### [Example 4]

A laminate was obtained and evaluated in the same manner as in Example 1, except that the amount of "DENACOL EX-321L" used was changed from 2 to 8 parts by mass.

### [Example 5]

A liquid mixture of 100 parts by mass of the urethane resin (A-2) composition obtained in Synthesis Example 2, 5 parts by mass of trimethylolpropane polyglycidyl ether ("DENACOL EX-321", manufactured by Nagase ChemteX Corporation, number average molecular weight: 250 to 350, the number of functional groups: 2 to 3, chlorine content: 7% to 8% by mass), and 1 part by mass of an associative thickener ("HYDRAN ASSISTER T10", manufactured by DIC Corporation) was applied onto a PVC leather to achieve a solid film thickness of 30 microns, and dried at 70°C for 2 minutes and further dried at 120°C for 2 minutes to produce a polyurethane resin film, and the resultant laminate was evaluated in the same manner as above.

### [Example 6]

A laminate was obtained and evaluated in the same manner as in Example 5, except that polyglycerol polyglycidyl ether ("DENACOL EX-512", manufactured by Nagase ChemteX Corporation, number average molecular weight: 500 to 600, the number of functional groups: 3 to 5, chlorine content: 6% to 7% by mass) was used in place of "DENACOL EX-321".

### [Example 7]

A laminate was obtained and evaluated in the same manner as in Example 2, except that the urethane resin (A-3) composition was used in place of the urethane resin (A-1) composition.

### [Example 8]

A laminate was obtained and evaluated in the same manner as in Example 2, except that the urethane resin (A-4) composition was used in place of the urethane resin (A-1) composition.

### [Example 9]

A laminate was obtained and evaluated in the same manner as in Example 2, except that the urethane resin (A-5) composition was used in place of the urethane resin (A-1) composition.

### [Comparative Example 1]

A laminate was obtained and evaluated in the same manner as in Example 1, except that "DENACOL EX-321L" was not used.

### [Comparative Example 2]

A laminate was obtained and evaluated in the same manner as in Example 1, except that the urethane resin (AR-1) composition was used in place of the urethane resin (A-1) composition.

### [Method for Measuring Number Average Molecular Weight and Weight-Average Molecular Weight]

The number average molecular weight of each of the polyols and the weight-average molecular weight of each of the urethane resins that are used in Examples and Comparative Examples are values determined by gel permeation chromatography (GPC) under the following conditions.

### Measurement Device: High performance GPC ("HLC-8220GPC", manufactured by Tosoh Corporation)

Columns: The following columns manufactured by Tosoh Corporation were connected in series and used.
"TSKgel G5000" (7.8 mm I.D. × 30 cm) × 1
"TSKgel G4000" (7.8 mm I.D. × 30 cm) × 1
"TSKgel G3000" (7.8 mm I.D. × 30 cm) × 1
"TSKgel G2000" (7.8 mm I.D. × 30 cm) × 1
Detector: RI (differential refractometer)
Column Temperature: 40°C
Eluent: tetrahydrofuran (THF)
Flow Rate: 1.0 mL/minute
Injection Amount: 100 µL (a tetrahydrofuran solution having a sample concentration of 0.4% by mass)
Standard samples: The following types of standard polystyrene were used to produce calibration curves.

### (Standard Polystyrene)

"TSKgel standard polystyrene A-500", manufactured by Tosoh Corporation
"TSKgel standard polystyrene A-1000", manufactured by Tosoh Corporation
"TSKgel standard polystyrene A-2500", manufactured by Tosoh Corporation
"TSKgel standard polystyrene A-5000", manufactured by Tosoh Corporation
"TSKgel standard polystyrene F-1", manufactured by Tosoh Corporation
"TSKgel standard polystyrene F-2", manufactured by Tosoh Corporation
"TSKgel standard polystyrene F-4", manufactured by Tosoh Corporation
"TSKgel standard polystyrene F-10", manufactured by Tosoh Corporation
"TSKgel standard polystyrene F-20", manufactured by Tosoh Corporation
"TSKgel standard polystyrene F-40", manufactured by Tosoh Corporation
"TSKgel standard polystyrene F-80", manufactured by Tosoh Corporation
"TSKgel standard polystyrene F-128", manufactured by Tosoh Corporation
"TSKgel standard polystyrene F-288", manufactured by Tosoh Corporation
"TSKgel standard polystyrene F-550", manufactured by Tosoh Corporation

### [Method for Measuring Number Average Molecular Weight of Epoxy Compound (C)]

Measurement Device: Waters 2695, manufactured by Waters Corporation
Columns: The following columns manufactured by Waters Corporation were connected in series and used.
"Waters Styragel HR 1 THF" (7.8 mm I.D. × 30 cm) × 1
"Waters Styragel HR 0.5 THF" (7.8 mm I.D. × 30 cm) × 1 Detector: RI (differential refractometer)
Column Temperature: 40°C
Eluent: tetrahydrofuran (THF)
Flow Rate: 1.0 mL/minute
Injection Amount: 100 µL (a tetrahydrofuran solution having a sample concentration of 0.4% by mass)
Standard sample: "EasiVial PS-L Polystyrene (Low MW)" was used as standard polystyrene to produce calibration curves.

**[Table 1]**

| Table 1 | | Ex. 1 | Ex. 2 | Ex. 3 | Ex. 4 | Ex. 5 | Ex. 6 |
|---|---|---|---|---|---|---|---|
| Urethane resin (A) | | (A-1) | (A-1) | (A-2) | (A-1) | (A-2) | (A-2) |
| Epoxy compound (C) | | DENACO L EX-321L | DENACO L EX-321L | DENACO L EX-321L | DENACO L EX-321L | DENACO L EX-321 | DENACO L EX-512 |
| Number average molecular weight | | 250 to 350 | 250 to 350 | 250 to 350 | 250 to 350 | 250 to 350 | 500 to 600 |
| Chlorine content ($ by mass) | | 0.2 to 0.4 | 0.2 to 0.4 | 0.2 to 0.4 | 0.2 to 0.4 | 7 to 8 | 6 to 7 |
| Number of functional groups | | 2 to 3 | 2 to 3 | 2 to 3 | 2 to 3 | 2 to 3 | 3 to 5 |
| Evaluati on items | Bleeding resistance | Good | Good | Good | Good | Good | Good |
| | Heat discolorati on resistance | B | A | A | A | B | B |

**[Table 2]**

| Table 2 | | Ex. 7 | Ex. 8 | Ex. 9 | Comp. Ex. 1 | Comp. Ex. 2 |
|---|---|---|---|---|---|---|
| Urethane resin (A) | | (A-3) | (A-4) | (A-5) | (A-1) | (AR-1) |
| Epoxy compound (C) | | DENACOL EX-321L | DENACOL EX-321L | DENACOL EX-321L | | DENACOL EX-321L |
| Number average molecular weight | | 250 to 350 | 250 to 350 | 250 to 350 | | 250 to 350 |
| Chlorine content (% by mass) | | 0.2 to 0.4 | 0.2 to 0.4 | 0.2 to 0.4 | | 0.2 to 0.4 |
| Number of functional groups | | 2 to 3 | 2 to 3 | 2 to 3 | | 2 to 3 |
| Evaluati on items | Bleeding resistance | Good | Good | Good | Good | Good |
| | Heat discolorati on resistance | A | B | A | C | D |

It was found that Examples 1 to 9, that is, the laminates according to the present invention, were excellent in bleeding resistance and heat discoloration resistance.

In contrast, Comparative Example 1, which was an aspect not using the epoxy compound (C), had poor heat discoloration resistance.

Comparative Example 2, which was an aspect using a urethane resin having an anionic group in place of the urethane resin (A), had poor heat discoloration resistance.

## Claims

1. A laminate, comprising:
a thermoplastic resin layer; and
a coating formed from a urethane resin composition including a urethane resin (A) having a nonionic group, water (B), and an epoxy compound (C).

2. The laminate according to claim 1, wherein the epoxy compound (C) has a number average molecular weight of 200 to 1,500.

3. The laminate according to claim 1 or 2, wherein the epoxy compound (C) has a number of functional groups of 2 to 6.

4. The laminate according to any one of claims 1 to 3, wherein the epoxy compound (C) has no aromatic ring.

5. The laminate according to any one of claims 1 to 4, wherein the epoxy compound (C) has a chlorine content of 9% by mass or lower.

6. The laminate according to any one of claims 1 to 5, wherein an amount of the epoxy compound (C) contained is 4 to 16 parts by mass with respect to 100 parts by mass of the urethane resin (A).

7. The laminate according to any one of claims 1 to 6, wherein the nonionic group of the urethane resin (A) is formed by a compound having an oxyethylene structure.

8. A synthetic leather, comprising the laminate according to any one of claims 1 to 7.

9. The synthetic leather according to claim 8, wherein the thermoplastic resin is polyvinyl chloride.
